# EUROPÄISCHE PATENTSCHRIFT

(11) **EP 3 715 702 B1**
(45) Veröffentlichungstag und Bekanntmachung des Hinweises auf die Patenterteilung: **10.05.2023**
(21) Anmeldenummer: 19165942.4
(22) Anmeldetag: 28.03.2019
(51) Int. Cl.: H05B 45/395, F21S 4/24, F21Y 115/10, F21Y 103/10

(54) **KONSTANTSPANNUNGS-LED-STREIFEN**
CONSTANT VOLTAGE LED STRIP
BANDES À DEL À TENSION CONSTANTE

(43) Veröffentlichungstag der Anmeldung: 30.09.2020
(73) Patentinhaber: Stepan Engineering GmbH, 8887 Mels (CH)
(72) Erfinder: STEPAN, Thomas, 8880 Walenstadt (CH); STEPAN, Peter, 8887 Mels (CH)
(74) Vertreter: Patentbüro Paul Rosenich AG

(56) Entgegenhaltungen:
- EP-A1- 3 290 787
- EP-A1- 3 334 263
- WO-A1-2008/112284
- DE-U1-202018 104 566
- FR-A1- 3 048 056

## Beschreibung

Die Erfindung betrifft LED-Streifen gemäss dem Oberbegriff des Anspruchs 1.

Die Erfindung betrifft somit insbesondere Konstantspannungs-LED-Streifen, bei denen die LED's mittels neuartiger Anschlusskonfigurationen mit unterschiedlichen Lichtströmen/Leistungen betrieben werden können. Weiter betrifft die Erfindung ein Verfahren zur Auswahl einer bestimmten Leuchtstärken eines Konstantspannungs-LED-Streifens gemäss dem Oberbegriff des Anspruchs 13.

Insbesondere geht es um Konstantspannungs-LED-Streifen (im Folgenden meistens nur mit der nachfolgenden Abkürzung bezeichnet: SELV) aus einem ersten, einem nachfolgenden zweiten und nachfolgenden n-ten - seriell angeordneten und voneinander trennbaren - parallel geschalteten Lichterzeugermodul, mit jeweils einem ersten internen durchgeschleiften Netz für die eigene Stromversorgung jedes Lichterzeugermoduls und für die Stromversorgung jeder der nachfolgenden zweiten bzw. n-ten Lichterzeugermodule, wenigstens je eine LED - in der Regel mehrere LED's pro Lichterzeugermodul - o.dgl.. Mit "o.dgl." ist gemeint, dass die Erfindung nicht auf LED's als solche eingeschränkt ist. Als Lichterzeugerelemente können auch beliebig andere Lichtquellen dienen, sofern sie in einem Lichterzeugermodul nach Art eines LED-Streifens bzw. eines Konstantspannungs-LED-Streifen (SELV) eingesetzt werden können, wie z. B. Laserdioden, OLED Leuchtelemente, Glühfadenlampen o.dgl..

Weiters umfassen diese SELV's - wie an sich bekannt - wenigstens je eine elektronische Steuerung für diese LED o.dgl., welche die LED o.dgl. im Betriebsfall bestromt, Eingangs- und Ausgangsanschlussbahnen zum Anschliessen des elektrischen Netzes an eine Versorgungsspannung, wobei an jeder Eingangs- und Ausgangsanschlussbahn wenigstens je eine Durchschnittstelle zum Durchtrennen des Streifens zwischen zwei Lichterzeugermodulen mittels Schere o.dgl. vorgesehen sind, so dass jedes (getrennte) Lichterzeugermodul oder alle verbundenen Lichterzeugermodule bei Bedarf über seine Eingangs- und/oder Ausgangsanschlussbahnen (individuell) an eine Versorgungsspannung anschliessbar ist bzw. sind.

Diese bekannten Durchschnittstellen dienen dem Ablängen des SELV's auf die benötigte Länge zum Einbau in eine Lampe oder zur Montage an einem Objekt. Schneidet man herkömmliche SELV's an ihren Durchschnittsstellen durch, dann trennt man dadurch die grundsätzlich verbundenen Eingangsanschlussbahnen von den Ausgangsanschlussbahnen. Mit anderen Worten, aus einer verbundenen Eingangs- und Ausgangsanschlussbahn werden separierte Ausgangsanschlussbahnen am ersten Lichterzeugermodul und Eingangsanschlussbahnen am (nachfolgenden) zweiten Lichterzeugermodul. Somit sind - elektrisch gesehen - die Ausgangsanschlussbahnen und die Eingangsanschlussbahnen bis zum Durchschneiden immer am selben Potential.

Bekannt sind als nächstliegender Stand der Technik flexible oder starre LED-Streifen (SELV's) mit einem Spannungsbereich von typischer Weise 12, 24 oder 48 VDC. Solche Streifen werden je nach Spannung produziert und gelagert, obwohl u. U. die LED's selbst und die Elektronik selbst im Wesentlichen identisch sind.

Angeschlossen werden die flexiblen SELV's mittels zwei Lötpads (Ground "-" und Spannung "+"), welche mit einer Zuleitung verlötet werden oder mittels einem Klemmstecker kontaktiert werden. Solche Klemmstecker werden oft auch als PCB-Steckverbindungen bezeichnet.

Als Standard verfügt jedes Lichterzeugermodul jedes SELV's über eine elektronische Stromregelung, welche die LED's pro Lichterzeugermodul oder Abschnitt (meistens 6 - 8 LED's in Serie) mit einem vordefinierten Strom betreiben. Diese einzelnen Stromerzeugermodule sind - wie schon erwähnt - parallel auf dem flexiblen Streifen angeordnet, so dass sich eine Kette (Strip) von zusammengeschalteten LED's bildet, welche mit der Konstantspannung betrieben wird.

Daraus folgt, dass pro Leistung/Lichtstrom ein spezieller Typ LED-Streifen verwendet/gelagert wird. Der Markt (Verarbeiter/Endkunden) verlangt je nach Anwendung differenzierte Licht-Leistungen/Lichtströme - für Leuchten typischerweise im Bereich von 600 - 4000 Im (Lumen) pro Laufmeter.

Die Firma Tridonic GmbH & Co KG offenbart und produziert eine solche typische Leuchte unter der Bezeichnung "talexxmodul", wie im März 2019 über diese URL https://www.tridonic.ch/ch/products/talexxmodule-Ile-flex-g1-8mm-exc.asp eingesehen werden kann.

Ebenso fallen von der Firma Tridonic GmbH & Co KG im März 2019 auch die folgenden SELV's unter den Stand der Technik: LLEFLEXG1EXC mit vier verschiedenen Lichtströmen 600, 1200, 1800 und 2500 Im.

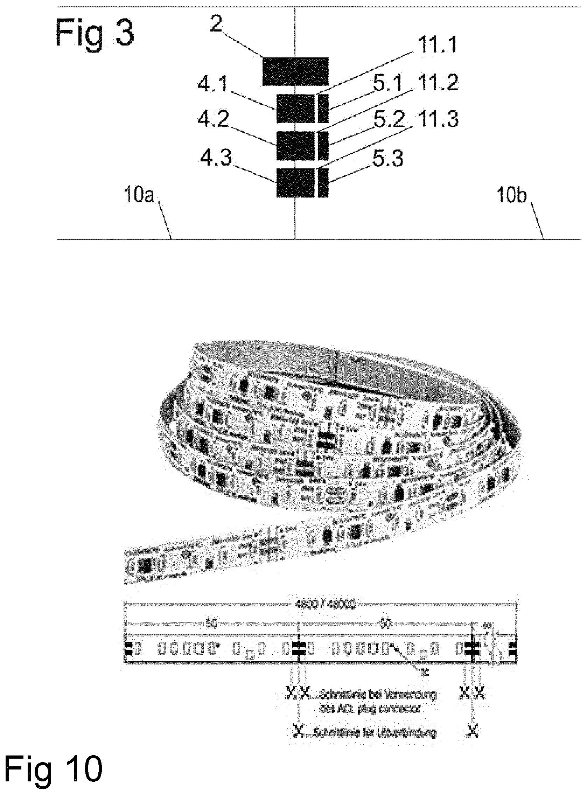

Der typische Aufbau zeigt sich dabei wie auf Fig.10 (ein Bild aus der zitierten URL).

Man erkennt in der Fig. 10 drei Durchschnittsstellen pro Eingangs- und Ausgangsanschlussbahnen: eine mittige für eine Lötverbindung und zwei seitliche für eine Verbindung mittels Stecker. Auch die Erfindung hält an dieser Praxis fest und bietet wenigstens eine Durchschnittsstelle oder zwei oder drei, wie in Fig. 10 gezeigt. Ebenso nutzt die Erfindung verschiedene Kontaktierungsmöglichkeiten, wie Löten oder Kontaktstecker.

Stand der Technik ist somit, dass die SELV's immer in derselben Konfiguration - sprich 6-8 LED/Lichterzeugermodul hergestellt werden. Eine typische Länge eines solchen Moduls ist z. B. 5 cm. Die unterschiedlichen Leistungen werden über die jeweils speziell programmierte elektronische Schaltung gemacht. Dies immer pro Typ SELV. Bei einer Leuchten-Herstellerfirma sind z. B. jeweils in je 50 m-Rollen zwei verschiedenen Leistungsstufen auf Lager. Das Layout wie auch die LED's sind bei den Typen genau gleich, nur die Bestromung der LED (=Leistung) ist unterschiedlich, durch eine werkzeitig unterschiedliche Konfigurierung der Elektronik aller Lichterzeugermodule.

Somit ist Standard, dass die Lichterzeugermodule an sich immer auf Maximalleistung ausgelegt werden, dass jedoch durch einen produktionstechnischen Eingriff in die elektronische Steuerung bei der Herstellung der SELV's die Lichtleistung über eine voreingestellte Bestromung definiert wird.

Für unterschiedliche Lichtleistungen werden somit nahezu identische SELV's hergestellt, die nach den unterschiedlichen Lichtleistungen getrennt am Lager gehalten werden müssen.

Überlegungen, für unterschiedliche Lichtleistungen am gleichen SELV einfach unterschiedliche Spannungen auf der Eingangsseite zu wählen, schlugen fehl. Dies deshalb, weil wenn man über verschiedene Netzspannungen am SELV Schalt-Regler bräuchte, die jedoch für LED Lichterzeugermodule ungeeignet sind.

Schalt-Regler haben nämlich einen hohen Preis, stellen zusätzliche Komponenten dar, sind schlecht PWM Dimmbar (wegen Impedanzen, was zu einem Flackern des Lichts in gewissen Bereichen führen kann). Sie benötigen ausserdem Kondensatoren, die die Lebenszeit der elektronischen Schaltung begrenzen, und benötigen für den Betrieb an verschiedenen Spannungen verschiedene Netzteile, was wiederum zu mehr Lageraufwand führt, insbesondere bei ON/OFF-Varianten und DALI-Varianten. "DALI" bedeutet "Digital Addressable Lighting Interface". Es ist ein Kommunikationsprotokoll für den Beleuchtungsbereich in Gebäuden und dient zur Kommunikation zwischen lichttechnischen Betriebsgeräten, wie z. B. elektronischen Vorschaltgeräten, Helligkeitssensoren oder Präsenzmeldern.

Ein weiterer Stand der Technik ist DE202018104566, in dem eine Beleuchtungseinrichtung offenbart wird die zum Betrieb mit einer ersten Spannung die Leiterbahnen identische und antiparallel vom Strom durchflossene Gruppen schaffend angeordnet sind, und bei der zwei Leiterbahnen wahlweise mittels einer Brücke verbindbar sind, derart, dass in Reihe geschaltete Gruppen von LEDs geschaffen sind und in der gebrückten Schaltungs-anordnung die Beleuchtungseinrichtung mit einer zweiten höheren Spannung betreibbar ist.

FR3048056 offenbart ein Leuchtband mit Leuchtdioden mit (i) einer ersten Anordnung, bei der sich ein Raster über zwei elementare Einheiten erstreckt, (ii) eine zweite Anordnung, die sich von der ersten Anordnung unterscheidet, in der jede elementare Einheit eine einzelne Gruppe, und (iii) eine Stromsteuereinheit, wobei das Band zwischen zwei aufeinanderfolgenden Elementareinheiten trennbar ist.

EP3334263 offenbart eine Leiterplatte, die mit elektrischen Leiterbahnen und metallische Kontakten, die geeignet sind, über Verbindungen kurzge-schlossen zu werden, versehen ist um alle der folgenden Verbindungen zu ermöglichen: (a) eine Verbindung einer LED-Kette zwischen einem ersten positiven Anschluss und einem dritten positiven Anschluss, (b) eine Verbindung der LED-Kette zwischen dem ersten positiven Anschluss und einem ersten negativen Anschluss, (c) eine Verbindung der LED-Kette zwischen einem zweiten positiven Anschluss und dem dritten positiven Anschluss, und (d) eine Verbindung der LED-Kette zwischen dem zweiten positiven Anschluss und dem ersten negativen Anschluss.

EP3290787 offenbart eine langgestreckte Begrenzungsleuchte mit einer Anordnung von Lichtquellen. Die Anordnung der Lichtquellen kann in Intervallen geschnitten werden, um die Anordnung zu verkürzen, während gleichzeitig die verbleibenden Lichtquellen in den resultierenden geschnittenen Stücken Licht emittieren können.

WO 2008/112284 A1 offenbart eine Beleuchtungsvorrichtung umfassend eine Vielzahl von Beleuchtungseinheiten, wobei mindestens eine der genannten Beleuchtungseinheiten einen Montagesitz für eine Beleuchtungseinstellimpedanz umfasst.

Die heute verwendete Technik auf der elektrischen/elektronischen Seite von SELV's ist somit ausbalanciert nach technischer Leistung, Kosten und Lebensdauer.

Aufgabe der vorliegenden Erfindung ist es, die Flexibilität im Einsatz von Konstantspannungs-LED-Streifen (SELV's) zu erhöhen und zwar insbesondere auch dahingehend, dass für verschiedene Licht-Leistungen nicht verschiedene SELV's hergestellt und gelagert werden müssen. Das soll helfen, Lagerkosten (Lagerbedarf) zu reduzieren.

Anstelle Leuchten mit unterschiedlichen Leistungen herzustellen, ist erfindungsgemäss beabsichtigt, eine Einheitsleuchte herzustellen, bei der dann lediglich durch schaltungstechnische Massnahmen werkseitig eine unterschiedliche Leistungsabgabe einstellbar ist.

Daraus ergeben sich die folgenden Vorteile: Höhere Stückzahl von SELV's in der Massenfertigung, geringere Lagerhaltungskosten, flexiblere Anwendung.

Die Aufgabe wird durch die Merkmale der unabhängigen Ansprüche 1 und 13 gelöst, welche die Erfindung definieren.

Vorteilhafte Weiterbildungen sind in den Figuren, der Figurenbeschreibung und in den abhängigen Patentansprüchen dargelegt.

Gemäss der Erfindung weist ein Konstantspannungs-LED-Streifen (SELV) gegenüber dem Stand der Technik neu bei wenigstens einer der Eingangs- und Ausgangsanschlussbahnen eine Durchschnittstelle mit einer markierten Verbindungsschnittstelle auf, die sich von den bisher bekannten Durchschnittsstellen dadurch unterscheidet, dass an ihr die Spannungsversorgung in das Netz unterbrechbar oder herstellbar ist.

Die Markierung ist ein technisch erforderliches Element, um es den Leuchtenherstellern oder Anwendern zu ermöglichen, die Schnittstelle zu identifizieren. Eine Markierung im Sinne der Erfindung ist jede Massnahme im Bereich der Eingangs- und Ausgangsanschlussbahnen, die es dem Monteur ermöglicht, die Schnittstelle zu erkennen, zu schliessen oder zu öffnen - beispielsweise mittels Lötvorgang oder mittels Montage eines entsprechend ausgebildeten Steckers.

Somit kann nun durch einen Leuchtenhersteller nicht nur zwischen Lichterzeugermodulen mechanisch getrennt werden (wie bisher, um die Länge der LED-Streifen an den Längenbedarf in der Leuchte anzupassen), sondern kann auch durch schaltungstechnische Massnahmen bewirkt werden, dass nachfolgende Lichterzeugermodule mit Spannung versorgt werden oder nicht. Dies ist im Falle von Lötbrücken auch umkehrbar. Das bedeutet, dass einmal gewählte Einstellungen später wieder geändert werden können.

Daraus ergibt sich ein universellerer Einsatz von solchen SELV's, indem für jedes Lichterzeugermodul - auch im nicht durchtrennten Zustand - die Spannungsversorgung hergestellt oder getrennt werden kann.

Das findet z. B. dort Anwendung, wo man von einer Seite der SELV's in einem Beleuchtungskörper mit einer ersten Versorgungsspannung in den SELV einspeist und von der anderen Seite der SELV mit einer zweiten Versorgungsspannung (gegenläufig) einspeisen möchte, um z. B. Spannungsabfälle über die Länge des eingesetzten SELV's zu vermeiden oder um mittlere Lichterzeugermodule ohne Lichtstromerzeugung zu belassen, da periphere an die mittleren links und rechts angrenzende Lichterzeugermodule zunächst genügend gewünschten Lichtstrom erzeugen.

Es wird zum besseren Verständnis auf das Datenblatt 12/18-LED307-14 von der Firma Tridonic GmbH & Co KG verweisen, bei dem dargestellt ist, dass je nach Länge von SELV-Ketten und gewünschtem relativem Lichtstrom dieser aufgrund der Leitungsverluste abnimmt. So nimmt z. B. bei einem gewählten Lichtstrom von 1200 Im bei einer Länge von 6 m der relative Lichtstrom ab. Bei einem relativen Lichtstrom von 1800 Im erfolgt dieser Effekt bereits bei einer Länge von 4 m und bei einem relativen Lichtstrom von 2500 Im bei einer Länge von 2.4 m. Nur bei einem Lichtstrom von nur 600 Im ergibt sich eine Kettenlänge von fast 10 m.

Durch die Erfindung können diese Längen gewissermassen verdoppelt werden, indem beidseitig einer Kette von Lichterzeugermodulen eingespeist wird und in der Mitte der Kette die Eingangsanschlussbahnen getrennt werden. Wünscht man später jedoch den relativen Lichtstrom abzusenken, stellt man die Verbindung wieder her und beendet die Einspeisung von der anderen Seite. Somit ist erfindungsgemäss bei ein und demselben SELV eine Variation der Lichtströme möglich.

Ebenso findet das Anwendung, wo man bei einem bereits installierten Beleuchtungskörper willkürlich weitere Lichterzeugermodule (die bisher nicht unter Spannung waren) später hinzuschalten möchte (jeweils vom ersten Lichterzeugermodul in Richtung des letzten Lichterzeugermoduls des selben SLEV's) oder wegschalten (jeweils vom letzten Lichterzeugermodul des SLEV's in Richtung Spannungsversorgung), ohne die Grundstruktur des SELV's oder des Beleuchtungskörpers zu zerstören (Im Falle des Wegschaltens z. B. durch Durchschneiden des Streifens, was bisher als Möglichkeit zur Verfügung stand.)

Aufgrund der neuen markierten Verbindungsschnittstelle ergibt sich somit eine deutliche Reduktion von Lagerbedarf an SELV's - damit verbunden von Lagerkaptial, Lagerplatz, Materialabschreib, welcher bei nicht mehr verwendetem Material alter Generationen entsteht. Denn SELV's werden gegenwärtig ca. einmal pro Jahr mit einem Update versehen. So können bei einem Generationenwechsel schneller die Lager abverkauft/abgebaut werden und rascher die jeweils neue Generation eingeführt werden.

Erfindungsgemäß weist wenigstens eine der die Eingangs- und Ausgangsanschlussbahnen - vorzugsweise durch die markierte Verbindungsschnittstelle getrennt - einen Primärteil und einen Sekundärteil auf, wobei der Primärteil die Durchschnittsstelle(n) aufweist und der Sekundärteil mit dem durchgeschleiften Netz des SLEV's verbunden ist. Jeder Sekundärteil einer Eingangs- und Ausgangsanschlussbahn ist elektrisch mit dem Netz des ersten Lichterzeugermoduls und jedem nachfolgenden Lichterzeugermoduls verbunden, insbesondere indem jeder Sekundärteil elektrisch jeweils mit jedem ihm gleichartigen Sekundärteil des nachfolgenden Lichterzeugermoduls verbunden ist. Im Falle einer hergestellten oder belassenen Verbindung zwischen einem Primär- und einem Sekundärteil einer Eingangs- und Ausgangsanschlussbahn ist die Sekundärseite jeder nachfolgenden Eingangs- und Ausgangsanschlussbahn aufs gleiche elektrische Potential gelegt wie die Sekundärseite der zugeordneten Eingangsanschlussbahn des vorhergehenden Lichterzeugermoduls.

Durch die Auftrennung in Primär- und Sekundärteil bei gleichzeitiger Verbindung der Netze zu den jeweiligen Sekundärteilen ermöglicht das automatische Durchschleifen von einer eingangs gewählten Anschlussvariante auf alle nachfolgenden Lichterzeugermodule. Man kann somit durch eine einmalige Beschaltung am Anfang einer Reihe von Lichterzeugermodulen durch eine Lötbrücke (oder Entfernen einer solchen) oder durch einen entsprechend ausgebildeten Stecker (oder Schalter) mit vorkonfektioniertem Kabel für alle Lichterzeugermodule eine definierte V-Spannungsversorgung auswählen, die somit bei jeder elektronischen Schaltung die gleiche Bestromung der LED's und damit die gleiche Lichtleistung bewirkt.

Mit anderen Worten: Die Lichtleistung des gesamten (beliebig langen) Konstantspannungs-LED-Streifen (SELV) kann durch eine einfache Lötung oder Klemmung oder Entfernung einer Leiterbahn oder eines Klemmsteckers an den Eingangs- und Ausgangsanschlussbahnen durchgängig eingestellt werden, ohne die einzelnen elektronischen Steuerungen selbst zu manipulieren.

Bei einer Verdrahtung mit Stecker können diese konfiguriert bestellbar sein oder sie können konfigurierbar ausgeführt sein, so dass der Leuchtenhersteller einen Universalstecker selbst konfiguriert, um eine gewünschte Auswahl der Eingangs-bzw. Ausgangsanschlussbahnen vorzunehmen. Demgegenüber ist Löten oder Entlöten sehr einfach und in jedem Betriebsumfeld anwendbar und unabhängig von einer Steckerlieferung.

Anstelle der unterschiedlichen Lötbrücken/-pads zur "Umschaltung" könnte im Rahmen der Erfindung - wie schon oben erwähnt - auch ein Drehschalter oder Druckschalter auf der Eingangsanschlussbahn des jeweils ersten Lichterzeugermoduls montiert werden, der es (später sogar dem Benutzer und nicht nur dem Elektriker bzw. Leuchtenhersteller) erlaubt, zwischen den unterschiedlichen Leistungsstufen umzuschalten. Im Schutzumfang ist dementsprechend auch ein solcher Aufbau umfasst, bei dem anstelle von entfernbaren oder hinzufügbaren Lötbrücken ein Umschalter vorgesehen ist, der das Auswählen oder Aufheben von elektrischen Verbindungen gestattet.

Dabei ist jedoch zu beachten, dass der SELV auf eben den genannten 50 m-Rollen (oder 5 m-Rollen) gelagert wird. Der Durchschneidabstand ist typischerweise zwischen 30 und 100 mm.

Weiter ist zu beachten, dass der Platz auf dem SELV sehr bescheiden ist. Der LED-Streifen soll nämlich bei einem minimalen Profil mittels opaler Abdeckung (z. B. B x H = 16 x 12 mm) ein homogenes Lichtbild erwirken.

Somit ist das Wichtige an dieser Weiterentwicklung der Erfindung, dass, obwohl man das LED-Band wie bisher mit der Schere durchschneiden kann und obwohl die nachfolgenden Eingangs- und Ausgangsanschlussbahnen gegebenenfalls an den markierten Schnittstellen getrennt sind, man nur einmal am Anfang jeder Lichterzeugermodulketten die gewünschte Lichtleistung aller nachfolgenden Lichterzeugermodule einstellen kann. Dies erfolgt möglichst in einem Arbeitsschritt, welcher ohnedies jedes Mal beim Anschliessen der Spannungsversorgung am SELV erfolgt und somit jeweils ohnedies einmal (wie bisher) gemacht werden muss, nämlich wie z. B. mittels Lötens oder Klemmens.

Daraus folgt vorteilhafterweise, dass es zur Lagerhaltung lediglich gleichartige Konstantspannungs-LED-Streifen (SELV) benötigt, die in ihrer Funktion jeweils durch einen einfachen Handgriff beliebig eingestellt werden können.

Bevorzugt wird die markierte Verbindungsschnittstelle durch einen wegschabbare Leiterbrücke oder durch eine Unterbrechung einer Eingangsoder Ausgangsanschlussbahn - insbesondere zwischen dem Primärteil und dem Sekundärteil - gebildet. Die Art der Markierung spielt im Rahmen der Erfindung keine Rolle. Es kann dies ein aufgebrachter oder fehlender Lack oder eine Farbe sein, eine Markierung am Grundmaterial des SELV's (Plastik) oder auch eine taktile Markierung, die aus einer Erhöhung oder Vertiefung des Leiterbahnenmaterials der Anschlussbahnen o.dgl. besteht. Dabei kann die Markierung auf der Anschlussbahn oder unterhalb derselben oder seitlich derselben angebracht sein.

Weiter bevorzugt ist/sind die Leiterbrücke und oder die Eingangs- oder Ausgangsanschlussbahnen aus Lötzinn oder einem gut lötbaren Material bzw. als Lötpads ausgebildet.

Bei den erfindungsgemässen Lichterzeugermodulen können (wie an sich bekannt) zwei Eingangs- und Ausgangsanschlussbahnen zum Anschliessen des Netzes bzw. der Netze an eine Versorgungsspannung vorgesehen sein, von denen je eine für den V+ -Anschluss und die jeweils andere für den V- - Anschluss dient.

Gemäss einer Weiterbildung der Erfindung können wenigstens drei Eingangsund Ausgangsanschlussbahnen zum Anschliessen des Netzes an eine Versorgungsspannung vorgesehen sein, von denen je eine für den V+ - Anschluss und die jeweils wenigstens beiden anderen für den V- -Anschluss (oder umgekehrt) von wenigstens zwei getrennten Netzen in jedem Lichterzeugermodul dient, wobei jedes der wenigstens beiden Netze mit der elektronische Steuerung so verbunden ist, dass diese die LED's je nach gewählter Spannungsbelegung der Netze unterschiedlich bestromt.

Damit ist gemeint, dass bei Belegung eines bestimmten der wenigstens beiden Netze durch die elektronische Steuerung im Betriebszustand in die LED's ein bestimmter Strom eingespeist wird, bei Belegung des anderen Netzes ein bestimmter anderer Strom eingespeist wird und gegebenenfalls bei Belegung von beiden Netzen mit Spannung ein dritter Strom in die LED's eingespeist wird. Der V+ -Anschluss bleibt diesbezüglich unverändert, da er vorzugsweise für alle wenigstens zwei Netze als V+ -Anschluss verwendet wird. Im Falle einer umgekehrten Auslegung, ist es der V+ -Anschluss der variiert, während der V- -Anschluss unverändert bleibt.

Selbstverständlich könnten auch die V+ -Anschlüsse für jedes Netz separat gewählt werden (also für jedes Netz ein eigener V+ -Anschluss), wobei dadurch die Anzahl der Leitung auf dem SELV erhöht würden (oder umgekehrt).

Alternativ zu dieser Darstellung mit den unterschiedlichen Netzen kann elektrisch auch von einem Aufbau mit nur einem Netz gesprochen werden, das jedoch unterschiedliche Signalpfade für V- aufweist, an denen gegebenenfalls gleiche V- -Werte oder auch unterschiedliche V- -Werte anlegbar sind (oder im umgekehrten Aufbau unterschiedliche V+ -Werte).

Entscheidend für diese Weiterbildung der Erfindung ist nicht die Höhe der V-(Signal)-Spannung, sondern dass jede elektronisch Steuerung jedes ersten Lichterzeugermoduls eine durch sie eindeutig auswertbare (Spannungs)-Information erhält, die es ihr ermöglicht, die jeweils dieser (Signal)-Spannung oder diesen (Signal)-Spannungen zugeordnete Bestromung der LED's des ersten Lichterzeugermoduls vorzunehmen (im umgekehrten Fall wäre es die V+ -(Signal)-Spannung.)

Gemäss der bevorzugten Ausbildung der Erfindung, dass jeder Sekundärteil einer Eingangsanschlussbahn elektrisch mit dem Netz des ersten Lichterzeugermoduls und jedem dazwischenliegenden Lichterzeugermoduls verbunden ist oder elektrisch anders ausgedrückt, dass jede V- - Signalbelegung einer bestimmten Eingangsanschlussbahn an dessen Sekundärteil durchgeschleift ist zum Sekundärteil der Eingangsanschlussbahn des nachfolgenden Lichterzeugermoduls, ergibt sich der überraschende Effekt, dass durch Definition der gewünschten Bestromung am ersten Lichterzeugermodul automatisch ohne weitere Massnahmen auch alle weiteren Lichterzeugermodule im Betriebszustand die gleicher Bestromung aufweisen.

Das bedeutet andererseits, dass es möglich ist, mit ein und demselben erfindungsgemäss aufgebauten SELV unterschiedliche Lichtleistungen auf allen Lichterzeugermodulen einzustellen, indem lediglich geringfügige Manipulationen an den ersten Eingangs- und Ausgangsanschlussbahnen vorgenommen werden.

Selbstverständlich kann der Fachmann ausgehend von dieser Lehre, auch Mischbelegungen vornehmen, indem er z. B. die ersten beiden Lichterzeugermodule mit einer bestimmten Bestromung definiert und durch Umlöten an den Eingangs- bzw. Ausgangsanschlussbahnen des nachfolgenden Lichterzeugermoduls für dieses und die nachfolgenden unterschiedliche Bestromung definiert. Der Flexibilität sind somit erfindungsgemäss keine Grenzen gesetzt.

Die elektronische Steuerung ist bei dieser Ausbildung somit so aufgebaut, dass sie in jedem Lichterzeugermodul mit allen Netzen verbunden ist (bzw. mit allen V-n-Signalpfaden oder umgekehrt mit allen V+ -Signalpfaden verbunden ist), jedoch selektiv je nach Auswahl des Netzes bzw. der Signalpfade durch Auswahl (Belegung oder Öffnung) der jeweiligen Verbindungsschnittstelle eine Auswahl der gewünschten Bestromung der LED's ermöglicht, so dass die gleichen LED's je nach vorgenommener Netzwahl bzw. Signalspannungspfadwahl eine bestimmte - somit netzabhängige bzw. V- -Signalspannungspfad-abhängige - Lichtleistung abgeben.

Ob innerhalb der elektronischen Steuerung dieses durch diskreten Schaltungsaufbau oder durch Software gelöst ist, bleibt der handwerklichen Ausgestaltung der SELV's bzw. der elektronischen Steuerung überlassen und ist nicht Gegenstand der Basis-Erfindung.

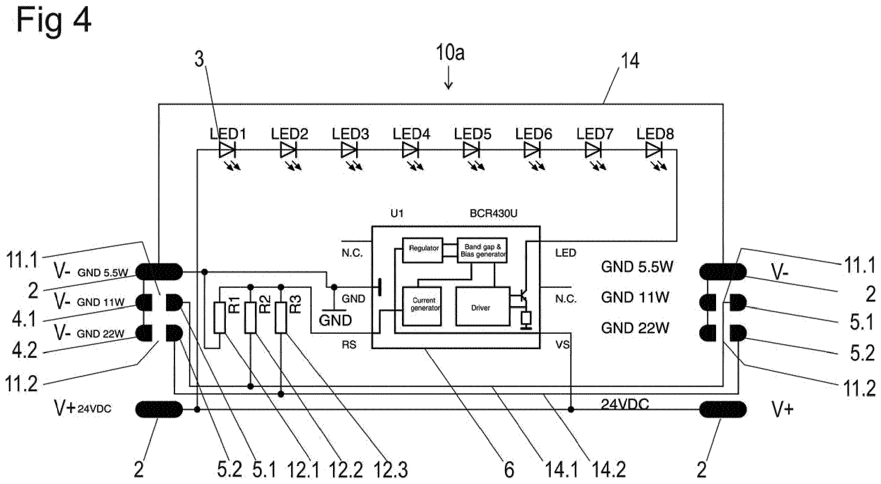

Ein konkret bevorzugter Ausführungsvorschlag, wie er nachfolgend im Zusammenhang mit der Figurenbeschreibung der Figs. 4-6 nochmals beschrieben wird, ist sehr einfach, da innerhalb der oder an der elektronischen Steuerung aus jedem Netz bzw. von jedem V- - Signalspannungspfad ein eigener elektrischer Widerstand in Serie geschaltet ist, so dass über die Höhe des jeweiligen Widerstands oder über die Summer der parallel geschalteten Widerstände - im Falle von mehreren geschlossenen Verbindungsstellen-Kontakten - die Helligkeit (Leistung der LED's) definiert wird. Durch diese Massnahme können die elektronischen Steuerungen selbst wieder identisch für alle Lichterzeugermodule ausgebildet sein und es definiert lediglich die Spannungsbelegung an den entsprechenden Eingängen dieser Steuerungen, deren Tätigkeit hinsichtlich der Bestromung der ihnen zugeordneten LED's o.dgl..

Anstelle von Widerständen könnten hier erfindungsgemäss auch andere elektronische Bauteile eingesetzt werden, die der elektronischen Steuerung die erforderlichen Signale zur Stromsteuerung geben.

Eine bevorzugte konkrete Weiterbildung von oben angegebenen SELV's ergibt sich, wenn vier Eingangs- und Ausgangsanschlussbahnen zum Anschliessen des Netzes an eine Versorgungsspannung vorgesehen sind, von denen je eine für den V+ -Anschluss und die jeweils drei anderen für den V- -Anschluss von drei getrennten Netzen im Lichterzeugermodul bzw. in den Lichterzeugermodulen dient, wobei jedes der drei Netze mit der elektronischen Steuerung so verbunden ist, dass diese im Betriebszustand die LED's je nach Spannungsbelegung der Netze unterschiedlich bestromt und wobei der jeweilige Strom so gewählt ist, dass bei Nutzung des ersten Netzes von der wenigstens einen LED eine Lichtleistung von 600 Im abgebbar ist, bei Nutzung des zweiten Netzes von der wenigstens einen LED eine Lichtleistung von 1200 Im abgebbar ist, bei Nutzung des dritten Netzes eine Lichtleistung von der wenigstens einen LED eine Lichtleistung von wenigstens 1800 Im abgebbar ist und vorzugsweise bei einer Nutzung von allen drei Netzen gleichzeitig eine Lichtleistung von der wenigstens einen LED eine Lichtleistung von wenigstens 2400 Im abgebbar ist.

Wie die elektronische Steuerung und die LED's o.dgl. durch den Fachmann - nach Kenntnis der Erfindung - konkret auszulegen sind, dass sie den angegebenen Anforderungen entsprechen, ist handwerkliches Grundwissen des Fachmanns, so dass darauf hier nicht näher eingegangen werden muss.

Die Erfindung umfasst somit auch SELV's nach einem der vorhergehenden Aufbauten, bei denen mehr als ein Netz vorgesehen ist, wobei alle Netze einen gemeinsamen V+ -Pol besitzen, der an seinen Eingangs- und Ausgangsanschlussbahnen keine Verbindungsschnittstelle aufweist und lediglich die Eingangs- und Ausgangsanschlussbahn für die V- -Pole der einzelnen Netze je eine Verbindungsschnittstelle aufweisen.

Erfindungsgemässe SELV haben dabei bevorzugt im Auslieferungszustand alle Verbindungsschnittstellen verbunden und gestatten nach Bedarf durch Auskratzen oder Entlöten die Auftrennung. Alternativ sind im Auslieferungszustand alle Verbindungsschnittstellen offen und nach Bedarf durch Verlöten oder durch einen vorkonfigurierten Klemmstecker (oder Schalter) gegebenenfalls an einem konfektionierten Kabel verbindbar, der im geklemmten Zustand Abstände zwischen Anschlussbahnteilen überbrückt, wobei im Falle von Steckern oder Schaltern solche im Lieferzustand zum SELV beigegeben sind.

Selbstverständlich fallen unter den Patentschutz auch Klemmstecker oder Schalter oder vorkonfektioniertes Anschlusskabel gemäss obigen Angaben, die so ausgebildet sind, dass sie zur selektiven Überbrückung von markierten Verbindungsstellen gemäss einem der vorhergehenden Merkmale eingesetzt werden können.

Erleichtert wird für den Beleuchtungskörperkonfektionär, wenn gemäss einer Weiterbildung der Erfindung sowohl die Durchschnittstellen, als auch die Verbindungsschnittstellen durch sichtbare oder spürbare Linien markiert sind, wobei die Linien vorzugsweise - zur leichteren Diskriminierung von Durchschnittstellen und Verbindungsschnittstellen - erkennbar unterschiedlich ausgeführt sind.

Praktischerweise sind SELV mit mehr als zwei Eingangs- und Ausgangsanschlussbahnen im Rahmen der Erfindung so aufgebaut, dass eine Spannungsversorgung vorgesehen ist, die jeder Eingangs- und Ausgangsanschlussbahn, die nicht V+ darstellt, eine identische V- -Spannung zugeordnet ist, wobei vorzugsweise nachfolgend der Eingangs- und Ausgangsanschlussbahn je ein Widerstand in Serie geschaltet ist, so dass das V- -Potential gegenüber der elektronischen Steuerung im Falle eines Stromflusses um je einen bestimmten Wert absinkt, oder dass jeder Eingangs- und Ausgangsanschlussbahn, die nicht V+ darstellt, ein unterschiedliches V- -Spannungspotential zugeordnet ist, so dass jedes Netz mit einer unterschiedlichen Spannung belegbar ist, bzw. sodass die elektronische Steuerung durch jede Eingangs- und Ausgangsanschlussbahn, die nicht V+ (oder umgekehrt V-) darstellt, ein unterschiedliches V- - Spannungspotential zugeführt bekommt.

Ohne zu obigen Ausführungen einen nennenswerten elektrischen Auswirkungs-Unterschied anzugeben, ist durch den Schutzumfang der Patentansprüche auch umfasst, dass anstelle mehrere Netze nur ein einziges Netz durchgeschleift ist mit einem V+ und einem V- -Anschluss zur Spannungsversorgung aller Lichterzeugermodule und dass wenigstens eine zusätzliche elektrische Leitung verlegt ist, die einerseits zur elektronischen Steuerung verbindet und andererseits durchgeschleift ist von dem Sekundärteil einer ersten Eingangs- und Ausgangsanschlussbahn zu dem Sekundärteil der nachfolgenden Eingangs- und Ausgangsanschlussbahn des jeweils nachfolgenden Lichterzeugermoduls zum Anlegen wenigstens einer Steuerspannung, wobei die elektronische Steuerung so ausgelegt ist, dass sie bei Nichtanlegen der Steuerspannung/-en eine andere Bestromung der LED vornimmt, als beim Anlegen der Steuerspannung/-en.

Die zuletzt angegebene Variante wird weitergebildet, indem mehr als zwei zusätzliche elektrische Leitungen vorgesehen sind und/oder indem alle Steuerspannungen V+ oder V- sind.

Eine einfache, arbeitssparende Lösung/Weiterbildung ergibt sich, bei allen obigen Varianten, wenn die Primärseiten aller geteilten Anschlussbahnen auf dem gleichen Spannungspotential liegen bzw. verbunden sind.

Die Erfindung stellt auch ein Verfahren zur Auswahl einer bestimmten Leuchtstärken einer SELV unter Schutz, deren LED's durch Steuerung ihres Eingangsstroms zu unterschiedlichen Leuchtstärken angeregt werden können, bei dem ein SELV zur Verfügung gestellt wird, dass mehrere unterschiedliche Netze oder mehrere zusätzliche elektrische Leitungen zur Anspeisung oder zur Ansteuerung der elektronischen Steuerung aufweist, wobei jedem Netz oder jeder zusätzlichen Leitung innerhalb der elektronischen Steuerung ein bestimmter Bestromungswert für die LED zugeordnet ist, und dass das der gewünschten Auswahl entsprechende Netz oder entsprechende zusätzliche Leitung mit der Versorgungsspannung bzw. mit einer Steuerspannung belegbar gemacht wird, indem eine unterbrochene Zuleitung des entsprechenden Netzes bzw. der entsprechenden zusätzlichen Leitung mittels Lötbrücke oder mittels voreingestellten Klemmsteckers geschlossen wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig.1: zeigt drei Lichterzeugermodule in einer Kette auf einem SELV mit vier Lötpads und einer elektronischen Steuerung, welche den Konstantstrom reguliert,
- Fig.2: stellt den gleichen Aufbau nach Fig.1 dar, welcher an eine Zuleitung angeschlossen ist, wobei mittels der Auswahl und Befestigung der Zuleitung eine Lötbrücke erstellt wird,
- Fig.3: zeigt den Bereich der unterbrochenen Eingangs- und Ausgangsanschlussbahnen vergrössert im Detail, wobei die Lötpad V- von den Lötpad "Brightness Control" getrennt sind,
- Fig.4: zeigt eine konkrete Ausgestaltung eines bevorzugten Ausführungsbeispiels eines SELV-Lichterzeugermoduls bei dem drei oder vier Lichtströme einstellbar sind,
- Fig.5: zeigt eine konkrete Ausgestaltung eines SELV's mit zwei Lichterzeugermodulen, bei denen pro Modul nur eine Lichtstromstärke oder keine auswählbar ist,
- Fig.6.: zeigt einen Aufbau ähnlich der Fig. 4 mit einer Beschaltung ähnlich wie Fig. 5 für das erste Lichterzeugungsmodul, jedoch mit einer erfindungsgemäss im Vergleich anderen Beschaltung für das zweite Lichterzeugermodul als in Fig. 5,
- Fig.7 -9: zeigen je ein Ausführungsbeispiel ähnlich wie in den Figs. 4 und 6, bei denen jedoch jeweils unterschiedliche Lichtströme ausgewählt/eingestellt sind, nämlich Lichtstromsetting 1 in Fig. 7, Lichtstromsetting 2 in Fig. 8 und Lichtstromsetting 3 in Fig. 9, und
- Fig.10: zeigt Bilder über SELV's aus dem Stand der Technik (der eingangs zitierten URL entnommen).

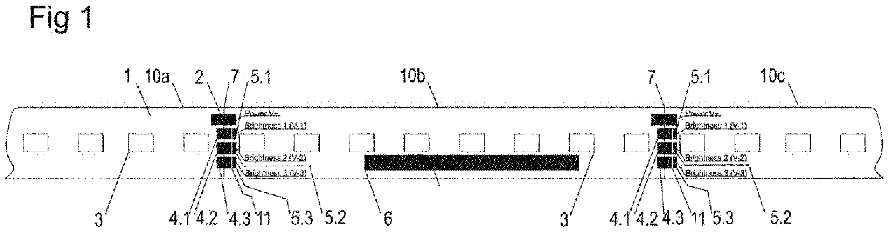

Fig. 1 zeigt drei Lichterzeugermodule 10a-10c in einer Kette auf einem SELV, der, wie an sich bekannt, zwischen je zwei Modulen 10 wenigstens eine Durchschnittsstelle 7 aufweist. Ebenso weist jedes Lichterzeugermodul 10a-10c, wie an sich bekannt, durchgängige Eingangs- und Ausgangsanschlussbahnen 2 auf. Sie sind im vorliegenden Beispiel V+ gewidmet. Symbolisch dargestellt sind LED's 3, die von einer elektronischen Steuerung 6 im Betriebsfall bestromt werden. Neu und erfinderisch befinden sich Eingangs- und Ausgangsanschlussbahnen 2, 4, 5 mit je einer zusätzlichen markierten Verbindungsschnittstelle 11, die - wie hier dargestellt - offen ist. Demzufolge gibt es bei diesem Ausführungsbeispiel gegenwärtig nur eine elektrische Leitung, die pro Lichterzeugungsmodul 10 belegt ist, nämlich jene bei 2 (V+). Ein solcher SELV kann kein Licht produzieren. Auch dann nicht, wenn beispielsweise an 4.1 (erste unterbrochene Eingangs- und Anschlussbahn) eine Spannung V- angelegt würde, weil diese wegen der Unterbrechung an der Verbindungsschnittstelle 11 nicht in das nachfolgende Lichterzeugungsmodul 10b oder 10c durchgeschleift wäre. Schliesst man jedoch diese Verbindungsschnittstelle 11 z. B. mittels Lötbrücke (hier nicht gezeigt), dann würde im Falle des Anliegens von V- das betreffende Lichterzeugermodul 10b oder 10c Licht erzeugen können und zwar mit dem Lichtstrom, den die elektronische Steuerung 6 bestromt, infolge der ihr zur Verfügung stehenden Spannungsinformation über den Anschluss 4.1 bzw. 5.1.

Gesetzt den Fall, dass die unterbrochenen Anschlussbahnen 4.2. und 4.3. bzw. deren Sekundärteile 5.2 und 5.3 der elektronischen Steuerung 6 andere Signale vermitteln, würde diese eine andere Bestromung vornehmen und demzufolge einen anderen Lichtstrom erzeugen.

Vereinfacht ausgedrückt: Durch die Erfindung wird eine Auswählbarkeit von Lichtströmen im Lichterzeugungsmodul 10a - 10c des SELV's gewährleistet, indem die elektronische Schaltung bestimmte - durch einfache Beschaltung - variierbare Signale erhält.

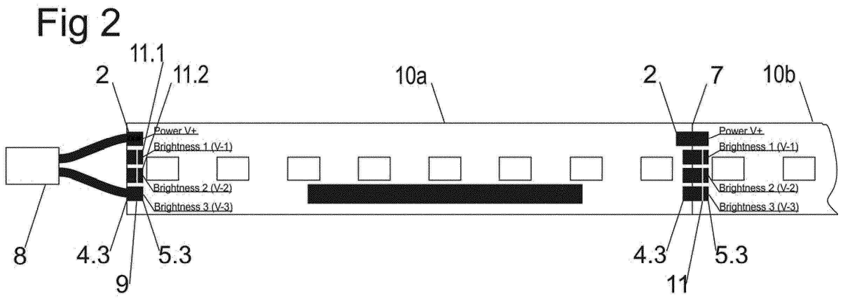

Fig. 2 stellt den gleichen Aufbau nach Fig.1 dar, bei dem jedoch die Anschlusssituation eines ersten Lichterzeugermoduls 10a gezeigt ist. Hier ist die unterbrochene Eingangsanschlussbahn 4.1 mittels Lötbrücke 9 zu ihrer Sekundärseite 5.3 geschlossen und sie ist mit einer Leitung 13 einer Spannungsversorgung 8 verbunden, die auch V+ zur durchgängigen Bahn 2 bringt.

Bei diesem Aufbau wird somit das Lichterzeugermodul 10a mit einer bestimmten Helligkeit leuchten, die durch die Helligkeitskontrolle an der Lötstelle 9 (4.3 - 9 - 5.3) in Verbindung mit deren Verbindung zur elektronischen Steuerung 6 definiert ist.

Da beim nachfolgenden Lichterzeugungsmodul 10b keine Lötbrücken vorgesehen sind, wird dieses finster bleiben, selbst dann, wenn wie standardmässig vorgesehen, 4.3. bzw. 5.3 mit 4.3 der Ausgangsanschlussbahn verbunden ist. Die erfindungsgemässe Unterbrechung der Verbindungsschnittstelle 11 verhindert eine Aktivierung der elektronischen Steuerung 6 des Lichterzeugermoduls 10b.

Wie später noch erörtert wird, ist eine besondere Ausgestaltung der Erfindung dergestalt, dass die Eingangs- und Ausgangsanschlussbahn 5.3 des ersten Lichterzeugungsmoduls 10a mit der Eingangs- und Ausgangsanschlussbahn 5.3 des zweiten Lichterzeugungsmoduls 10b jedoch verbunden ist (wie auch die anderen jeweiligen Sekundärteile untereinander elektrisch verbunden sind). Bei dieser Ausführung ergibt sich somit, dass im Falle der gezeigten Lötbrücke 9 zwischen der Eingangs- und Ausgangsanschlussbahnen 4.3 und 5.3 auch das zweite Lichterzeugermodul 10b an dem Sekundärteil 5.3. das gleiche elektrische Signal erhält wie an der Eingangs- und Ausgangsanschlussbahnen 5.3 des ersten Moduls 10a. In diesem Fall würde somit auch die LED's von dem Lichterzeugermodul 10b gleichartig leuchten wie jene von dem Lichterzeugermodul 10a, obwohl an der Verbindungsschnittstelle 11 eine Unterbrechung vorliegt.

Fig. 3 zeigt den Bereich der unterbrochenen Eingangs- und Ausgangsanschlussbahnen 4.1 - 4.3 bzw. 5.1 - 5.3 vergrössert und mit offenen Verbindungsschnittstellen 11.

Fig. 4 zeigt in selbsterklärlicher Art mehr von der Verdrahtung eines konkreten Ausführungsbeispiels, bei dem ersichtlich ist, dass drei Widerstände 12.1 - 12.3 dafür verantwortlich sind, dass bei einer jeweiligen Signaleinspeisung unterschiedliche Spannungen an die elektronische Steuerung 6 gelangen. In der vorliegenden Darstellung ist V- durch eine Lötbrücke 9 oder - wie hier konkret gezeigt - durch eine durchgängige Eingangs- und Ausgangsanschlussbahn 2 an die Stromversorgung anschliessbar, mit dem Effekt, dass der Widerstand R1/12.1 V- an die elektronische Steuerung 6 durchleitet und für einen entsprechenden Signaleingang bei der elektronischen Steuerung 6 bewirkt, der in der Folge durch die elektronische Steuerung 6 zu einer spezifischen Bestromung der LED's 3 führt. An den markierten Verbindungsschnittstellen 11.1 und 11.2 ist die Verbindung unterbrochen, so dass obwohl Eingangs- und Ausgangsanschlussbahnen 4.1. und 4.2 am gleichen Potential wie die angegebene Eingangs- und Ausgangsanschlussbahn 2 liegt (siehe die elektrischen Verbindungslinien zwischen 2, 4.1 und 4.2), führt dies zu keiner Signalabgabe an die Eingangs- und Ausgangsanschlussbahnen 5.1. und 5.2 auf der linken Seite des Lichterzeugungsmoduls 10. Deshalb sind auch die Eingangs- und Ausgangsanschlussbahnen 5.1 und 5.2 auf der rechten Seite spannungsfrei, da über Leiterbahnen 14.1 und 14.2 das Potential von den Eingangs- und Ausgangsanschlussbahnen 5.1. und 5.2. auf der linken Seite durchgeschleift ist.

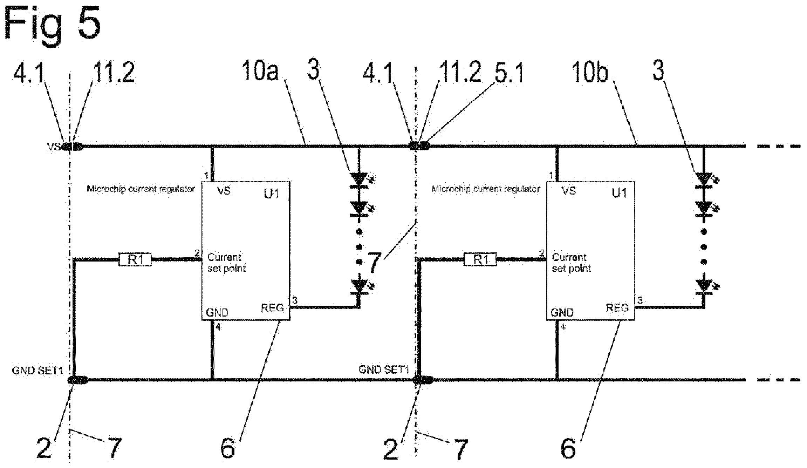

Fig. 5 zeigt demgegenüber einen wesentlich einfacheren SELV, der im Wesentlichen dem Stand der Technik entspricht mit Ausnahme der Tatsache, dass dieser SELV an den Verbindungsschnittstellen 11.2 je eine markierte Verbindungsschnittstelle aufweist.

In dieser konkreten Ausgestaltung ist an der linken Verbindungsschnittstelle 11.2 eine Lötbrücke 9 appliziert, während an der rechten markierten Verbindungsschnittstelle 11.2 eine solche Lötbrücke 9 fehlt. Gleichzeitig fehlt bei diesem Aufbau (gegenüber Fig. 4) eine Leiterbahn 14, so dass die Eingangs- und Ausgangsanschlussbahn 5.1 an der linken Seite nicht mit der Eingangs- und Ausgangsanschlussbahn 5.1. an der rechten Seite des Lichterzeugermoduls 10a verbunden ist, was zur Folge hat, dass in der gezeigten Schaltung 10a Licht erzeugen werden kann, im Lichterzeugermodul 10b jedoch nicht.

Schliesst man jedoch zu einem späteren Zeitpunkt die markierte Verbindungsschnittstelle 11.2 an der rechten Seite von dem Lichterzeugermodul 10a, führt das auch zu einer Spannungsversorgung vom Lichterzeugungsmodul 10b. Diese Manipulationen sind rückgängig machbar, woraus sich die Flexibilität dieses neuartigen SELV's ergibt.

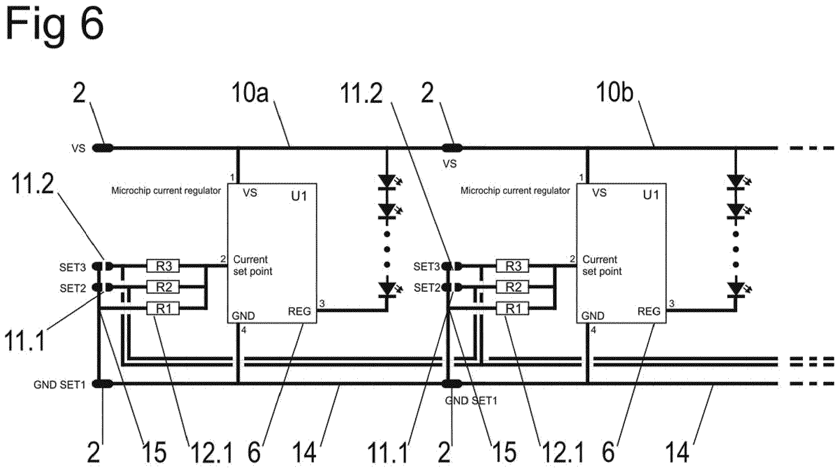

Der Aufbau nach Fig. 6 entspricht in seiner Komplexität wieder dem Aufbau nach Fig. 4 und zeigt konkret eine Bestromung der LED's 3 durch die Signaleinspeisung via Widerstand 12.1 in die elektronische Schaltung 6, die jedoch automatisch zu einer entsprechenden Bestromung aller Lichterzeugermodule 10a und 10b führt, da über die Leiterbahn 14 und die fixe Verbindung an der Verbindungsstelle 15 der Widerstand 12.1 in allen Lichterzeugermodulen 10a und 10b mit Spannung belegt wird und demzufolge jede elektronische Steuerung 6 das gleiche Signal erhält.

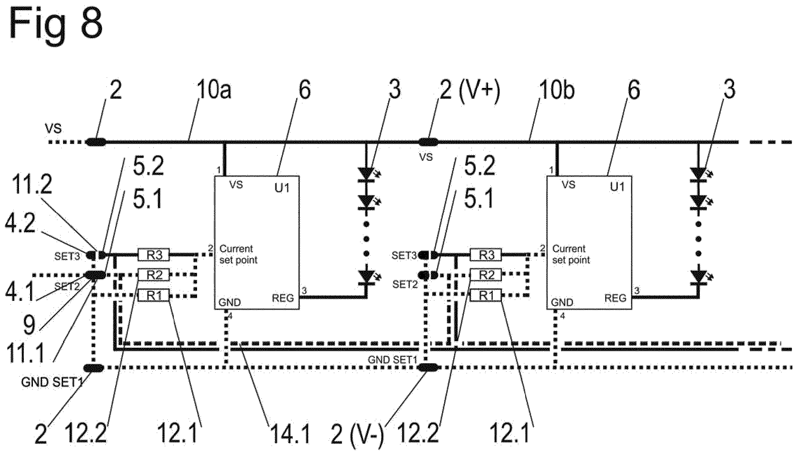

U1 in den Figs. 4-9 zeigt symbolisch einen Konstanstromregler (LED-Treiber), z. B. Infineon BCR430U. In anderen Worten ausgedrückt, wird zwischen "VS" und "GND SET1" eine Konstantspannung angelegt. Dadurch wird der Stromtreiber gespiesen. Über die Widerstände R1-R3 kann der gewünschte Betriebsstrom für die LED eingestellt werden (grösserer Widerstand = kleinerer Strom). Die elektronische Steuerung 6 (ein Microkontroller) regelt den eingestellten Strom zwischen VS(1) und REG(3). Wird nun eine Spannung zwischen "VS" und "SET2" angelegt und dort die Verbindungsschnittstelle 11.1 geschlossen (wie hier nicht gezeigt), erhält man einen anderen Betriebsstrom für die LED, was aus Fig. 8 ersichtlich ist.

Die Eingangs- und Ausgangsanschlussbahn (Lötpad) oder ein Stecker muss so gestaltet sein, dass man automatisch eine Lötbrücke erstellt (z. B GND und R2 verbindet), wie in Fig. 8 gezeigt.

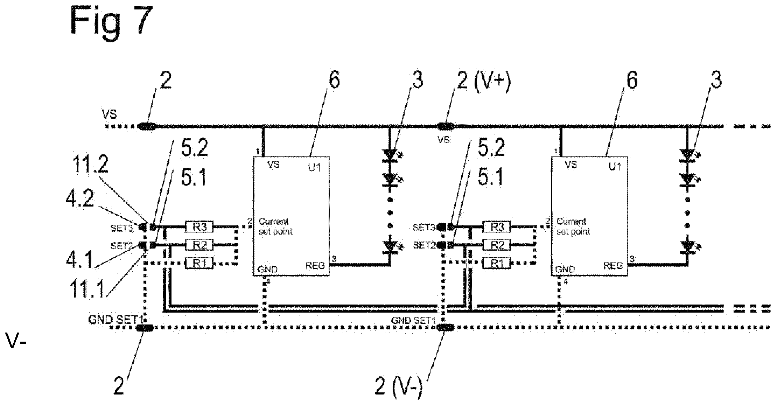

Fig. 7 zeigt den in Fig. 6 beschriebenen Aufbau in der dortigen Beschaltung jedoch mit deutlich sichtbaren Strompfaden.

In Fig. 8 kann man auch erkennen, dass aufgrund der unter Spannung stehenden Leiterbahnen 14 und 14.1 auch die Nachfolgemodule ihr Signal für die elektronische Steuerung 6 via der Widerstände 12.1. und 12.2. erhalten, was zu einer definitionsgemäss anderen Lichtleistung führt.

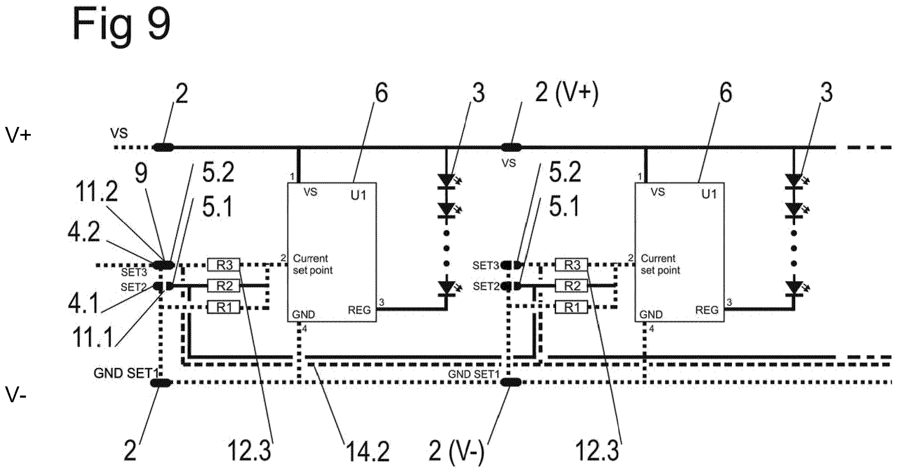

Fig. 9 zeigt den gleichen Aufbau wie Fig. 8 jedoch ist dort anstelle Widerstand 12.2 der Widerstand 12.3 im Signalpfad zur elektronischen Steuerung 6, was dementsprechend eine andere Lichtleistung erzielt, sofern der Widerstand 12.3. eine andere Grösse hat als R.2.

Eine weitere, nicht gezeigte Variante wäre, dass alle beiden markierten Verbindungsschnittstellen 11 verbunden sind, so dass alle drei Widerstande 12 zum Einsatz kommen.

Durch die Erfindung wird eine allfällige Dimmbarkeit des SELV's nicht beeinträchtigt, da diese üblicherweise durch einen externen Dimmer in Verbindung mit der elektronischen Steuerung 6 verwendbar ist.

Ein solcher Dimmer wäre vom Effekt gegebenenfalls auch als Alternative zur Erfindung selbst anzusehen, erzeugt jedoch wesentlich mehr Aufwand an der Anwenderseite, da er wesentlich teuer ist und eine zusätzliche Installation am Aufstellort der SELV-Beleuchtung erfordert.

Fig. 10 zeigt ein aufgerolltes SELV aus mehreren Lichterzeugermodulen gemäss dem Stand der Technik und darunter die Durchschneidesituation an diesen Lichterzeugermodulen mit je drei Markierungen für unterschiedliches Durchtrennen des SELV's zur Ablängung bei der Leuchtenherstellung.

Zusammenfassung der bevorzugten Ausführung in anderen Worten: Je nach Anschluss der Zuleitung an Lötpad V+ 2 und Lötpad V- 4.x kann mittels einer Lötbrücke 9 gemäss Fig. 2 zum Lötpad "Brightness Controll (5.x)" eine Verbindung erstellt werden, durch die die LED's mit unterschiedlicher Leistung/Lichtstrom angesteuert werden. Gemäss der Weiterentwicklung wird durch die elektronische Schaltung 6 (die auch als Blackbox dargestellt ist) der LED Strip 1 in seiner gesamten Länge - sprich auch an jeder folgenden elektronische Schaltung - auf die entsprechende Leistung/Lichtstrom eingestellt.

### Bezugszeichenliste

- 1: Konstantspannungs-LED-Streifen (SELV) > LED Strip
- 2: Eingangs- und Ausgangsanschlussbahn durchgängig > Lötpad, V+ oder V-
- 3: LED oder vergleichbare Lichterzeugungselemente
- 4: Primärteil einer unterbrochenen Eingangs- und Ausgangsanschlussbahn
- 4.1: erste unterbrochene Eingangs- und Ausgangsanschlussbahn > erster Primärteil > Lötpad V-1
- 4.2: zweite unterbrochene Eingangs- und Ausgangsanschlussbahn > zweiter Primärteil > Lötpad V-2
- 4.3: dritte unterbrochene Eingangs- und Ausgangsanschlussbahn > dritter Primärteil > Lötpad V-3
- 5: Sekundärteil einer unterbrochenen Eingangs- und Ausgangsanschlussbahn
- 5.1: erster Sekundärteil > Lötpad jenseits der Verbindungsschnittstelle 11.1 > Brightness Controll 1
- 5.2: zweiter Sekundärteil > Lötpad jenseits der Verbindungsschnittstelle 11.2 > Brightness Controll 2
- 5.3: dritter Sekundärteil > Lötpad jenseits der Verbindungsschnittstelle 11.3 > Brightness Controll 3
- 6: elektronische Steuerung
- 7: Durchschneidlinie SELV-Strip
- 8: Zuleitung, Spannungsversorgung
- 9: Lötbrücke V-3 "Brightness Control 3"
- 10: Lichterzeugermodul
- 10a: erstes Lichterzeugermodul
- 10b: zweites Lichterzeugermodul
- 10c: drittes Lichterzeugermodul
- 10n: n-tes Lichterzeugermodul
- 11: Markierte Verbindungsschnittstelle
- 11.1: erste markierte Verbindungsschnittstelle
- 11.2: zweite markierte Verbindungsschnittstelle
- 11.3: dritte markierte Verbindungsschnittstelle
- 12: Widerstand
- 12.1: erster Widerstand > R1
- 12.2: zweiter Widerstand > R2
- 12.3: dritter Widerstand > R3
- 13: Leitung
- 14: Leiterbahn
- 14.1: Leiterbahn zu 5.1
- 14.2: Leiterbahn zu 5.2
- 15: Verbindungsstelle

Zusätzliche Bezeichnungen in den Figuren sind dem Elektroniker und somit dem Fachmann und in jeder Sprache international selbstverständlich und werden hier aufgrund ihrer Üblichkeit nicht näher erläutert. Auch kann eine Übersetzung derselben ins Deutsche entfallen. Bei Bedarf können diese auch gelöscht werden, ohne den Umfang der Offenbarung zu ändern.

## Patentansprüche

1. Konstantspannungs-LED-Streifen (1) aufweisend:
ein erstes, ein nachfolgendes zweites und optional mindestens ein weiter nachfolgendes Lichterzeugermodul (10),
wobei die Lichterzeugermodule (10) seriell auf dem Konstantspannungs-LED-Streifen (1) angeordnet sind,
wobei die Lichterzeugermodule (10) elektrisch parallel geschaltet sind, und
wobei die Lichterzeugermodule (10) mittels Durchschneidlinien (7) voneinander trennbar sind,
**dadurch gekennzeichnet, dass** die Lichterzeugermodule (10) jeweils umfassen:
mindestens zwei elektrische Netze für die eigene Stromversorgung und für die Stromversorgung jedes der nachfolgenden Lichterzeugermodule,
wobei alle elektrischen Netze einen gemeinsamen V+ -Pol aufweisen und jedes Netz einen eigenen V- -Pol aufweist,
eine Vielzahl an Eingangs- und Ausgangsanschlussbahnen (2, 4, 5) zum selektiven Anschließen eines der mindestens zwei elektrischen Netze an eine externe Spannungsversorgung (8),
wobei eine der Eingangs- und Ausgangsanschlussbahnen (2) das Potential des gemeinsamen V+ -Pols aller elektrischen Netze annimmt und mit dem V+ -Pol der Versorgungsspannung verbindbar ist sind,
wobei die übrigen Eingangs- und Ausgangsanschlussbahnen (4, 5) in ihrer Anzahl der Anzahl der elektrischen Netze entsprechen und jede dieser übrigen Eingangs- und Ausgangsanschlussbahnen (4, 5) einem jeweils anderen der elektrischen Netze zugeordnet ist, und
wobei die übrigen Eingangs- und Ausgangsanschlussbahnen (4, 5) jeweils einen Primärteil (4) und einen Sekundärteil (5) aufweisen, an welchen die Spannungsversorgung des jeweils zugeordneten Netzes unterbrechbar oder herstellbar ist, wobei der Sekundärteil (5) das Potential des V- -Pols des entsprechenden elektrischen Netzes annimmt und wobei der Primärteil (4) eine Durchschnittstelle aufweist und mit dem V- -Pol der Versorgungsspannung verbindbar ist,
wenigstens eine LED (3),
eine elektronische Stromregler-Steuerung (6) welche dazu eingerichtet ist, die wenigstens eine LED (3) im Betriebsfall zu bestromen,
wobei die Stromregler-Steuerung (6) einen Steuereingang aufweist, über den mittels einer Spannungsvorgabe der Betriebsstrom für die wenigstens eine LED (3) eingestellt werden, und
eine Vielzahl an Widerständen (R1, R2, R3),
wobei die Anzahl der Widerstände (R1, R2, R3) der Anzahl der elektrische Netze entspricht und jeder Widerstand (R1, R2, R3) einem der elektrischen Netze zugeordnet ist, und
wobei die einzelnen Widerstände (R1, R2, R3) jeweils zwischen dem Steuereingang der Stromregler-Steuerung (6) und dem Sekundärteil (5) der Eingangs- und Ausgangsanschlussbahn (4, 5) des entsprechenden elektrischen Netzes geschaltet sind.

2. Konstantspannungs-LED-Streifen (1) nach Anspruch 1, **dadurch gekennzeichnet, dass** jeder Sekundärteil (5.1, 5.2, 5.3) einer Eingangs- und Ausgangsanschlussbahn (4, 5) elektrisch jeweils mit jedem ihm gleichartigen Sekundärteil (5.1, 5.2, 5.3) des nachfolgenden Lichterzeugermoduls (10n) verbunden ist, so dass im Falle einer hergestellten oder belassenen Verbindung zwischen einem Primär- (4) und einem Sekundärteil (5) einer Eingangs- und Ausgangsanschlussbahn (4, 5) die Sekundärseite jeder nachfolgenden Eingangs- und Ausgangsanschlussbahn (4, 5) aufs gleiche elektrische Potential gelegt ist wie die Sekundärseite der zugeordneten Eingangsanschlussbahn (5).

3. Konstantspannungs-LED-Streifen (1) nach Anspruch 1 oder 2, **dadurch gekennzeichnet, dass** Primärteil (4) und Sekundärtteil (5) jeweils durch eine markierte Verbindungsschnittstelle (11) getrennt sind und vorzugsweise die markierte Verbindungsschnittstelle (11) durch einen wegschabbare Leiterbrücke (9) oder durch eine Unterbrechung einer Eingangs- oder Ausgangsanschlussbahn (4, 5), insbesondere zwischen dem Primärteil (4) und dem Sekundärteil (5) gebildet ist.

4. Konstantspannungs-LED-Streifen (1) nach Anspruch 3, **dadurch gekennzeichnet, dass** die Leiterbrücke (9) und oder die Eingangs- oder Ausgangsanschlussbahnen (4, 5) aus Lötzinn oder einem gut lötbaren Material bzw. als Lötpads ausgebildet sind.

5. Konstantspannungs-LED-Streifen (1) nach einem der vorhergehenden Ansprüche, **dadurch gekennzeichnet, dass** wenigstens drei Eingangs- und Ausgangsanschlussbahnen (2, 4, 5) zum Anschliessen des Netzes an eine Versorgungsspannung (8) vorgesehen sind, von denen je eine (2) für den V+ -Anschluss und die jeweils wenigstens beiden anderen für den V-Anschluss von wenigstens zwei getrennten Netzen in jedem Lichterzeugermodul (10) dient, wobei jedes der wenigstens beiden Netze mit der elektronische Steuerung (6) so verbunden ist, dass diese die LEDs (3) je nach Spannungsbelegung der Netze unterschiedlich bestromt.

6. Konstantspannungs-LED-Streifen (1) nach Anspruch 5, **dadurch gekennzeichnet, dass** vier Eingangs- und Ausgangsanschlussbahnen (2, 4, 5) zum Anschliessen des Netzes an eine Versorgungsspannung (8) vorgesehen sind, von denen je eine (2) für den V+ -Anschluss und die jeweils drei anderen für den V- -Anschluss von drei getrennten Netzen im Lichterzeugermodul (10) bzw. in den Lichterzeugermodulen (10n) dient, wobei jedes der drei Netze mit der elektronischen Steuerung (6) so verbunden ist, dass diese im Betriebszustand die LEDs (3) je nach Spannungsbelegung der Netze unterschiedlich bestromt und wobei der jeweilige Strom so gewählt ist, dass bei Nutzung des ersten Netzes von der wenigstens einen LED (3) eine Lichtleistung von 600 Im abgebbar ist, bei Nutzung des zweiten Netzes von der wenigstens einen LED (3) eine Lichtleistung von 1200 Im abgebbar ist, bei Nutzung des dritten Netzes eine Lichtleistung von der wenigstens einen LED (3) eine Lichtleistung von wenigstens 1800 Im abgebbar ist, und vorzugsweise bei einer Nutzung von allen drei Netzen gleichzeitig eine Lichtleistung von der wenigstens einen LED (3) eine Lichtleistung von wenigstens 2400 Im abgebbar ist.

7. Konstantspannungs-LED-Streifen (1) nach einem der vorhergehenden Ansprüche, **dadurch gekennzeichnet, dass** alle Netze einen gemeinsamen V+ -Pol besitzen, der an seinen Eingangs- und Ausgangs-Anschlussbahnen (2) keine Verbindungsschnittstelle aufweist und lediglich die Eingangs- und Ausgangsanschlussbahn (4, 5) für die V- - Pole der einzelnen Netze je eine Verbindungsschnittstelle (11) aufweisen.

8. Konstantspannungs-LED-Streifen (1) nach Anspruch 7, **dadurch gekennzeichnet, dass** im Auslieferungszustand des Konstantspannungs-LED-Streifens (1) alle Verbindungsschnittstellen (11) verbunden sind und nach Bedarf durch Auskratzen oder Entlöten trennbar sind, oder dass im Auslieferungszustand alle Verbindungsschnittstellen (11) offen sind und nach Bedarf durch Verlöten oder durch einen vorkonfigurierten Klemmstecker gegebenenfalls an einem konfektionierten Kabel verbindbar sind, der im geklemmten Zustand Abstände zwischen Anschlussbahnteilen überbrückt.

9. Konstantspannungs-LED-Streifen (1) nach einem der vorhergehenden Ansprüche, **dadurch gekennzeichnet, dass** sowohl die Durchschnittstellen (7) als auch die Verbindungsschnittstellen (11) durch sichtbare oder spürbare Linien markiert sind, wobei die Linien vorzugsweise - zur leichteren Diskriminierung von Durchschnittstellen (7) und Verbindungsschnittstellen (11) - erkennbar unterschiedlich ausgeführt sind.

10. Konstantspannungs-LED-Streifen (1) nach einem der vorhergehenden Ansprüche, **dadurch gekennzeichnet, dass** nur ein einziges Netz durchgeschleift ist mit einem V+ und einem V- -Anschluss zur Spannungsversorgung aller Lichterzeugermodule (10) und dass wenigstens eine zusätzliche elektrische Leitung verlegt ist, die einerseits zur elektronischen Steuerung (6) verbindet und andererseits durchgeschleift ist von dem Sekundärteil (5) einer ersten Eingangs- und Ausgangsanschlussbahn (4, 5) zu dem Sekundärteil (5) der nachfolgenden Eingangs- und Ausgangsanschlussbahn (5) des jeweils nachfolgenden Lichterzeugermoduls (10n) zum Anlegen wenigstens einer Steuerspannung, wobei die elektronische Steuerung (6) so ausgelegt ist, dass sie bei Nichtanlegen der Steuerspannung/- en eine andere Bestromung der LED vornimmt, als beim Anlegen der Steuerspannung/-en.

11. Konstantspannungs-LED-Streifen (1) nach Anspruch 10, **dadurch gekennzeichnet, dass** mehr als zwei zusätzliche elektrische Leitungen vorgesehen sind und/oder dass alle Steuerspannungen V+ oder V- sind.

12. Konstantspannungs-LED-Streifen (1) nach einem der vorhergehenden Ansprüche, **dadurch gekennzeichnet, dass** die Primärseiten (4) unterbrochener Eingangs- und Ausgangsanschlussbahnen (4, 5) auf dem gleichen Spannungspotential liegen bzw. verbunden sind

13. Verfahren zur Auswahl einer bestimmten Leuchtstärken eines Konstantspannungs-LED-Streifens, dessen LEDs (3) durch Steuerung ihres Eingangsstroms zu unterschiedlichen Leuchtstärken angeregt werden können, **dadurch gekennzeichnet, dass** ein Konstantspannungs-LED-Streifen (1) nach Anspruch 1 bis 12 zur Verfügung gestellt wird, und dass das der gewünschten Auswahl entsprechende Netz mit der Versorgungsspannung (8) bzw. mit einer Steuerspannung belegbar gemacht wird, indem die markierte Verbindungsschnittstelle (11) des entsprechenden Netzes mittels Lötbrücke (9) oder mittels voreingestellten Klemmsteckers geschlossen wird.

## Claims

1. Constant voltage LED strip (1) having:
a first, a subsequent second, and optionally at least one further subsequent light generator module (10), wherein
the light generator modules (10) are arranged in series on the constant voltage LED strip (1), wherein
the light generator modules (10) are electrically connected in parallel, and wherein
the light generator modules (10) can be separated from each other by means of cut-through lines (7),
**characterised in that**, the light generator modules (10) in each case comprise:
at least two electrical networks for their own power supply, and for the power supply to each of the subsequent light generator modules, wherein
all electrical networks have a common V+ pole, and each network has its own V- pole,
a multiplicity of input and output connection tracks (2, 4, 5) for the selective connection of one of the at least two electrical networks to an external power supply (8), wherein
one of the input and output connection tracks (2) takes the potential of the common V+ pole of all electrical networks, and can be connected to the V+ pole of the supply voltage, wherein
the other input and output connection tracks (4, 5) correspond in number to the number of electrical networks, and each of these other input and output connection tracks (4, 5) is associated in each case with a different member of the electrical networks, and wherein
the other input and output connection tracks (4, 5) in each case have a primary part (4) and a secondary part (5), at which the voltage supply of the respectively associated network can be interrupted or applied, wherein the secondary part (5) takes the potential of the V- pole of the corresponding electrical network, and wherein the primary part (4) has a cut-through interface, and can be connected to the V- pole of the supply voltage,
at least one LED (3),
an electronic current regulator-control unit (6), which is configured to energise the at least one LED (3) in operation, wherein
the current regulator-control unit (6) has a control input, by way of which the operating current for the at least one LED (3) is adjusted by means of a voltage setting, and
a multiplicity of resistors (R1, R2, R3), wherein
the number of resistors (R1, R2, R3) corresponds to the number of electrical networks, and each resistor (R1, R2, R3) is associated with one of the electrical networks, and wherein
the individual resistors (R1, R2, R3) are in each case connected between the control input of the current regulator-control unit (6) and the secondary part (5) of the input and output connection track (4, 5) of the corresponding electrical network.

2. Constant voltage LED strip (1) according to Claim 1, **characterised in that**, each secondary part (5.1, 5.2, 5.3) of an input and output connection track (4, 5) is electrically connected in each case to the similar secondary part (5.1, 5.2, 5.3) of the subsequent light generator module (10n), so that in the event of a connection being made or left out between a primary (4) and a secondary part (5) of an input and output connection track (4, 5), the secondary side of each subsequent input and output connection track (4, 5) is connected to the same electrical potential as the secondary side of the associated input connection track (5) .

3. Constant voltage LED strip (1) according to Claim 1 or 2, **characterised in that**, the primary part (4) and secondary part (5) are in each case separated by a marked connection interface (11), and the marked connection interface (11) is preferably formed by a conductor bridge (9) that can be abraded, or by an interruption of an input or output connection track (4, 5), in particular between the primary part (4) and the secondary part (5).

4. Constant voltage LED strip (1) according to Claim 3, **characterised in that**, the conductor bridge (9) and/or the input or output connection tracks (4, 5) are made of a solder, or a material that can easily be soldered, or are designed as solder pads.

5. Constant voltage LED strip (1) according to one of the preceding claims, **characterised in that**, at least three input and output connection tracks (2, 4, 5) are provided for the connection of the network to a supply voltage (8), of which one (2) is used for the V+ connection and the at least two others are used for the V- connection of at least two separate networks in each light generator module (10), wherein each of the at least two networks is connected to the electronic control unit (6) in such a way that the latter energises the LEDs (3) in a different manner, depending on the voltages assigned to the networks.

6. Constant voltage LED strip (1) according to Claim 5, **characterised in that**, four input and output connection tracks (2, 4, 5) are provided for the connection of the network to a supply voltage (8), of which one (2) is used in each case for the V+ connection, and the other three are used in each case for the V- connection of three separate networks in the light generator module (10), or in the light generator modules (10n), wherein each of the three networks is connected to the electronic control unit (6) in such a way that, in the operating state, the latter energises the LEDs (3) in a different manner, depending on the voltages assigned to the networks, and wherein the respective current is selected in such a way that a light output of 600 Im can be emitted by the at least one LED (3) if the first network is used, a light output of 1200 Im can be emitted by the at least one LED (3) if the second network is used, a light output of at least 1800 Im can be emitted by the at least one LED (3) if the third network is used, and a light output of at least 2400 Im can preferably be emitted by the at least one LED (3) if all three networks are used simultaneously.

7. Constant voltage LED strip (1) according to one of the preceding claims, **characterised in that**, all networks have a common V+ pole which has no connection interface on its input and output connection tracks (2), and the input and output connection tracks (4, 5) in each case have just one connection interface (11) for the V- poles of the individual networks.

8. Constant voltage LED strip (1) according to Claim 7, **characterised in that**, in the delivery state of the constant voltage LED strip (1), all connection interfaces (11) are connected, and can be disconnected as required by abrasion or desoldering, or **in that**, in the delivery state, all connection interfaces (11) are open and can be connected as required by soldering, or by a preconfigured clamping connector, where appropriate on a preassembled cable, which in the clamped state bridges distances between connection track parts.

9. Constant voltage LED strip (1) according to one of the preceding claims, **characterised in that**, both the cut-through interfaces (7) and the connection interfaces (11) are marked by visible or perceptible lines, wherein the lines are preferably executed in a recognisably different manner, for easier discrimination between cut-through interfaces (7) and connection interfaces (11) .

10. Constant voltage LED strip (1) according to one of the preceding claims, **characterised in that**, only one single network is looped through with a V+ and a V-connection for the voltage supply of all light generator modules (10), and **in that**, at least one additional electrical line is laid, which, on the one hand, connects to the electronic control unit (6) and, on the other hand, is looped through from the secondary part (5) of a first input and output connection track (4, 5) to the secondary part (5) of the subsequent input and output connection track (5) of the respectively subsequent light generator module (10n) for the application of at least one control voltage wherein the electronic control (6) is designed in such a way that when the control voltage/s is/are not applied, the LED is energised in a different manner than when the control voltage/s is/are applied.

11. Constant voltage LED strip (1) according to Claim 10, **characterised in that**, more than two additional electrical lines are provided, and/or **in that**, all control voltages are V+ or V-.

12. Constant voltage LED strip (1) according to one of the preceding claims, **characterised in that**, the primary sides (4) of interrupted input and output connection tracks (4, 5) are at the same voltage potential, or are connected.

13. Method for the selection of a specific luminous intensity of a constant voltage LED strip, whose LEDs (3) can be excited to different luminous intensities by the control of their input current, **characterised in that**, a constant voltage LED strip (1) according to Claim 1 to 12 is provided, and **in that**, the supply voltage (8) or a control voltage can be applied to the network corresponding to the desired selection by closing the marked connection interface (11) of the corresponding network by means of a solder bridge (9), or by means of a preset clamping connector.

## Revendications

1. Bande à diodes électroluminescentes (DEL) à tension constante (1) comportant :
un premier module générateur de lumière (10), un deuxième suivant et en option au moins un autre module générateur de lumière suivant (10),
sachant que les modules générateurs de lumière (10) sont disposés en série sur la bande à diodes électroluminescentes (DEL) (1),
sachant que les modules générateurs de lumière (10) sont connectés électriquement en parallèle et
sachant que les modules générateurs de lumière (10) peuvent être séparés l'un de l'autre au moyen de lignes de coupure (7)
**caractérisée en ce que** les modules générateurs de lumière (10) comprennent respectivement :
au moins deux réseaux électriques pour l'alimentation en courant propre et pour l'alimentation en courant de chacun des modules générateurs de lumière suivants,
sachant que tous les réseaux électriques comportent un pôle V+ commun et chaque réseau comporte un pôle V-propre,
une pluralité de pistes de connexion d'entrée et de sortie (2, 4, 5) pour le raccordement sélectif d'un des au moins deux réseaux électriques à une alimentation en tension externe (8),
sachant qu'une des pistes de connexion d'entrée et de sortie (2) accepte le potentiel du pôle V+ commun de tous les réseaux électriques et peut être reliée au pôle V+ de la tension d'alimentation,
sachant que les autres pistes de connexion d'entrée et de sortie (4, 5) correspondent dans leur nombre au nombre des réseaux électriques et que chacune de ces autres pistes de connexion d'entrée et de sortie (4, 5) est attribuée respectivement à un autre des réseaux électriques et
sachant que les autres pistes de connexion d'entrée et de sortie (4, 5) comportent respectivement une partie primaire (4) et une partie secondaire (5) sur lesquelles l'alimentation en tension du réseau respectivement attribué peut être interrompue ou établie, sachant que la partie secondaire (5) accepte le potentiel du pôle V- du réseau électrique correspondant et sachant que la partie primaire (4) comporte une interface de sectionnement et peut être reliée au pôle V- de la tension d'alimentation,
au moins une diode électroluminescente (DEL) (3),
une commande de régulateur de courant électronique (6), qui est agencée pour alimenter en courant au moins une DEL (3) en cas de fonctionnement,
sachant que la commande de régulateur de courant électronique (6), comporte une entrée de commande par le biais de laquelle le courant de fonctionnement pour au moins une DEL (3) peut être réglé au moyen d'une consigne de tension et
une pluralité de résistances (R1, R2, R3),
sachant que le nombre de résistances (R1, R2, R3) correspond au nombre des réseaux électriques et chaque résistance (R1, R2, R3) est attribuée à un des réseaux électriques et
sachant que les résistances (R1, R2, R3) individuelles sont connectées respectivement entre l'entrée de commande de la commande de régulateur de courant (6) et la partie secondaire (5) de la piste de connexion d'entrée et de sortie (4, 5) du réseau électrique correspondant.

2. Bande à diodes électroluminescentes (DEL) à tension constante (1) selon la revendication 1, **caractérisée en ce que** chaque partie secondaire (5.1, 5.2, 5.3) d'une piste de connexion d'entrée et de sortie (4, 5) est électriquement reliée respectivement à chaque partie secondaire qui lui est équivalente (5.1, 5.2, 5.3) du module générateur de lumière suivant (10n) de telle manière qu'en cas d'une liaison établie ou abandonnée entre une partie primaire (4) et une partie secondaire (5) d'une piste de connexion d'entrée et de sortie (4, 5), le côté secondaire de chaque piste de connexion d'entrée et de sortie (4, 5) suivante est placé sur le même potentiel électrique que le côté secondaire de la piste de connexion d'entrée (5) attribuée.

3. Bande à diodes électroluminescentes (DEL) à tension constante (1) selon la revendication 1 ou 2, **caractérisée en ce que** la partie primaire (4) et la partie secondaire (5) sont respectivement séparées par une interface de connexion (11) marquée et l'interface de connexion (11) marquée est de préférence formée par un pontage conducteur (9) pouvant être enlevé par raclage ou par une interruption d'une piste de connexion d'entrée et de sortie (4, 5), en particulier entre la partie primaire (4) et la partie secondaire (5).

4. Bande à diodes électroluminescentes (DEL) à tension constante (1) selon la revendication 3, **caractérisée en ce que** le pontage conducteur (9) et/ou les pistes de connexion d'entrée et de sortie (4, 5), sont constitués d'étain à braser ou d'un matériau bien brasable ou sous la forme de pastilles à souder.

5. Bande à diodes électroluminescentes (DEL) à tension constante (1) selon l'une quelconque des revendications précédentes, **caractérisée en ce qu'**au moins trois pistes de connexion d'entrée et de sortie (2, 4, 5) pour connexion du réseau à une tension d'alimentation (8) sont prévues, parmi lesquelles une (2) sert pour la connexion V+ et respectivement au moins les deux autres servent pour la connexion V- d'au moins deux réseaux séparés dans chaque module générateur de lumière (10), sachant que chacun des au moins deux réseaux est relié à la commande électronique (6) de telle manière que ceux-ci alimentent en courant différemment les DELs (3) selon l'occupation en tension des réseaux.

6. Bande à diodes électroluminescentes (DEL) à tension constante (1) selon la revendication 5, **caractérisée en ce que** quatre pistes de connexion d'entrée et de sortie (2, 4, 5) pour connexion du réseau à une tension d'alimentation (8) sont prévues, parmi lesquelles une (2) sert pour la connexion V+ et respectivement les trois autres servent pour la connexion V- de trois réseaux séparés dans le module générateur de lumière (10) ou dans les module générateurs de lumière (10n), sachant que chacun des trois réseaux est relié à la commande électronique (6) de telle manière que ceux-ci alimentent en courant différemment les DELs (3) à l'état de fonctionnement selon l'occupation en tension des réseaux et sachant que le courant respectif est choisi de telle manière que lors de l'utilisation du premier réseau d'au moins une DEL (3), une puissance lumineuse de 600 lm peut être dégagée, lors de l'utilisation du deuxième réseau d'au moins une DEL (3), une puissance lumineuse de 1200 lm peut être dégagée, lors de l'utilisation du troisième réseau, une puissance lumineuse d'au moins une DEL (3) d'au moins 1800 lm peut être dégagée et de préférence lors de l'utilisation des trois réseaux simultanément, une puissance lumineuse d'au moins une DEL (3) d'au moins 2400 lm peut être dégagée.

7. Bande à diodes électroluminescentes (DEL) à tension constante (1) selon l'une quelconque des revendications précédentes, **caractérisée en ce que** tous les réseaux possèdent un pôle V+ commun, qui ne comporte sur ses pistes de connexion d'entrée et de sortie (2) aucune interface de connexion et seules les pistes de connexion d'entrée et de sortie (4, 5) pour le pôle V- des réseaux individuels comportent chacune une interface de connexion (11).

8. Bande à diodes électroluminescentes (DEL) à tension constante (1) selon la revendication 7, **caractérisée en ce qu'**à l'état de distribution de la bande à DEL à tension constante (1), toutes les interfaces de connexion (11) sont reliées et peuvent être séparées en cas de besoin par grattage ou débrasage ou **en ce qu'**à l'état de distribution, toutes les interfaces de connexion (11) sont ouvertes et peuvent être en cas de besoin le cas échéant reliées par brasage ou par un connecteur de serrage préconfiguré à un câble surmoulé, qui à l'état serré, effectue un pontage des intervalles entre les parties de la piste de connexion.

9. Bande à diodes électroluminescentes (DEL) à tension constante (1) selon l'une quelconque des revendications précédentes, **caractérisée en ce que** tant les interfaces de sectionnement (7) que les interfaces de connexion (11) sont marquées par des lignes visibles ou traçables , sachant que les lignes sont exécutées pouvant être identifiées de façon différente afin de distinguer plus facilement les interfaces de sectionnement (7) et les interfaces de connexion (11).

10. Bande à diodes électroluminescentes (DEL) à tension constante (1) selon l'une quelconque des revendications précédentes, **caractérisée en ce que** seulement un réseau unique est bouclé avec une connexion V+ et V- pour l'alimentation en tension de tous les modules générateurs de lumière (10) et **en ce qu'**au moins une ligne électrique supplémentaire est posée, qui est d'une part reliée pour la commande électronique (6) et d'autre part est bouclée de la partie secondaire (5) d'une première piste de connexion d'entrée et de sortie (4, 5) à la partie secondaire (5) de la piste de connexion d'entrée et de sortie (5) suivante du module générateur de lumière (10n) respectivement suivant pour l'application d'au moins une tension de commande, sachant que la commande électronique (6) est conçue de telle manière qu'elle procède en cas de non application, des tensions de commande à une autre alimentation en courant des DELs que lors de l'application des tensions de commande.

11. Bande à diodes électroluminescentes (DEL) à tension constante (1) selon la revendication 10, **caractérisée en ce que** plus de deux lignes électriques supplémentaires sont prévues et/ou **en ce que** toutes les tensions de commande sont V+ ou V-.

12. Bande à diodes électroluminescentes (DEL) à tension constante (1) selon l'une quelconque des revendications précédentes, **caractérisée en ce que** les côtés primaires (4) des pistes de connexion d'entrée et de sortie (4, 5) interrompues se trouvent sur le même potentiel de tension et sont reliés.

13. Procédé permettant la sélection d'une intensité lumineuse définie d'une bande à diodes électroluminescentes (DEL) à tension constante, dont les DELs (3) peuvent être activées par commande de leur courant d'entrée à des intensités lumineuses différentes, **caractérisé en ce qu'**une bande à DEL à tension constante (1) selon l'une quelconque des revendications 1 à 12 est mise à disposition et **en ce que** le réseau correspondant à la sélection souhaitée peut être occupé avec la tension d'alimentation (8) ou avec une tension de commande, l'interface de liaison (11) marquée du réseau correspondant étant fermée au moyen d'un pontage (9) ou au moyen d'un connecteur de serrage préréglé.
